# EUROPEAN PATENT SPECIFICATION

(11) **EP 1 262 310 B1**
(45) Date of publication and mention of the grant of the patent: **08.12.2004**
(21) Application number: 01113118.2
(22) Date of filing: 29.05.2001
(51) Int. Cl.: B29D 30/06, B29D 30/10, B29C 43/10

(54) **Method and apparatus for moulding and vulcanizing vehicle tyres**
Verfahren und Vorrichtung zum Formen und Vulkanisieren von Fahrzeugluftreifen
Procédé et dispositif pour le moulage et la vulcanisation de pneus pour véhicules

(43) Date of publication of application: 04.12.2002
(73) Proprietor: PIRELLI PNEUMATICI Società per Azioni, 20126 Milano (IT)
(72) Inventor: Armellin, Giancarlo, 20054 Nova Milanese (MI) (IT)
(74) Representative: Guella, Paolo

(56) References cited:
- GB-A- 1 261 916
- GB-A- 2 006 669
- US-A- 1 407 839
- US-A- 1 840 489
- US-A- 3 459 849
- US-A- 3 645 655
- US-A- 4 219 317
- US-A- 6 113 833

## Description

The present invention relates to a device and a method for moulding and vulcanizing tyres for vehicle wheels.

The method comprises, in its general aspect, the following steps: placing a tyre being built on a toroidal support having an outer surface which is essentially complementary to an inner surface of the tyre; enclosing the tyre and the toroidal support in a moulding cavity formed in a vulcanizing mould, the said moulding cavity having walls complementary to an outer surface of the tyre on completion of vulcanization; pressing the outer surface of the tyre against the walls of the moulding cavity; and imparting heat to the tyre being built, to cause molecular cross-linking.

In conventional methods of production, the components of the tyre, such as the carcass plies, annular bead fixing structures, belt structure, sidewalls, tread, etc., essentially have to be formed separately from each other in the first place, and then have to be assembled during the process of building the tyre.

The applicant's present tendency is to make use of production methods which enable the production and storage of the said components, usually known as semifinished products, to be minimized or possibly eliminated.

In practice, research and development have been directed towards new process designs which enable the said components to be formed directly in the tyre being built, according to a predetermined sequence.

In this connection, production processes have recently been proposed and developed, by the present applicant in some cases, in which the components are assembled during building on a rigid toroidal support which is then introduced into a vulcanization mould together with the green tyre. On completion of vulcanization, the rigid toroidal support is extracted from the vulcanizing unit and is removed from the tyre.

To enable this removal to take place, use is normally made of a collapsible or dismountable toroidal support, consisting of a plurality of circumferential sectors which can, for example, be individually withdrawn in the radial direction towards the axis of rotation of the tyre, so that they can be disengaged from the tyre by subsequently passing through the space formed between the beads of the tyre.

More particularly, a toroidal support of this type comprises a plurality of sectors arranged circumferentially around a geometrical reference axis, to form an outer surface which essentially reproduces the inner configuration of a tyre being built, a flange supporting at least one connection member for engagement with a handling device, a counter-flange which can be engaged for operation in a position axially opposite the said flange, and engagement elements which can firmly retain the sectors between the said flange and counter-flange.

In relation to the vulcanization process, EP 976 533 (in the name of the applicant) describes a process which is carried out by injecting at least one fluid (for example a mixture of nitrogen and water vapour) at high temperature and pressure into a space formed between the inner surface of the tyre and the outer surface of the toroidal support. The said fluid is supplied through suitable feed channels formed through the toroidal support and opening on its outer surface. This fluid directly transmits heat and pressure to the inner surface of the tyre, which is covered with a sheet of impermeable rubber, known in the art as a "liner", and causes the cover to expand at the crown by the desired amount, thus achieving satisfactory moulding.

In particular, the vulcanization takes place with a constant volume in the sidewalls, while there is a variable expansion at the crown, of the order of 0.5%-5%, depending on the type of tyre being built, to give 5%, depending on the type of tyre being built, to give the materials the correct stretch, which is important for the behaviour of the tyre when it is in use.

The said impermeable sheet (liner) is formed on the drum by winding circumferentially around it a sheet of elastomeric material, which is preferably extruded at the moment of deposition, and which extends from one side of the said drum to the other in a plurality of axially adjacent and/or partially overlapping turns.

The applicant has perceived that the use of the vulcanization fluid at high pressure and temperature, in direct contact with the surface of the liner, can produce slight defects in the appearance of the vulcanized tyre, such as bubbles and other superficial imperfections in the body of the liner, which, while having no effect on the behaviour and reliability of the tyre in use, cause the product to be rejected because its appearance will be unacceptable to the market, thus causing a reduction in the output of the system and an increase in the cost of the finished product.

However, the use of known vulcanization bladders is not feasible in an automatic system of the type described above.

This is because a known vulcanization bladder, extending from one bead to the other over the radially outer surface of the toroidal support, has a geometrical design such that it does not permit automatic operations of fitting the bladder on to, and removing it from, the support, which, as stated above, must be of the dismountable type.

The applicant has perceived that the aforesaid problems can be resolved by interposing between the crown surface of the toroidal support and the inner tyre surface a flexible diaphragm which is heat-resistant, chemically inert, elastic, and impermeable to the vulcanization fluid.

The present invention therefore relates primarily to a device for moulding a green tyre as from claim.

Preferably, the said diaphragm is provided with devices for fastening to the said support, located along the edges of the said band; even more preferably, it is provided with at least one coupling device, consisting essentially of an elongate branch which protrudes perpendicularly from its radially inner surface, which can be inserted into a corresponding hole formed in the said support, and which has a length such that the diaphragm can move away from the radially outer surface of the said support.

In the remainder of the description and in the claims, the term "moulding", unless otherwise specified, denotes both the moulding process itself and the process of vulcanization which accompanies it.

The term "crown surface" denotes the part of the toroidal support from which the green tyre moves away during the moulding process. This surface is also called an "expansion moulding" surface because of the movement of the volume of the corresponding portion of tyre within the greater volume of the moulding cavity; it is this movement that allows the aforesaid expansion of the crown portion of the tyre. Conversely, surfaces called "constant volume moulding" surfaces are those at which the volume of the tyre during moulding is essentially identical to the volume delimited between the said surfaces. These surfaces are essentially found, both on the mould and on the toroidal support, at the position of the sidewalls.

Preferably, the material of the said diaphragm is butyl, natural or silicone rubber, or mixtures of these. The said material can optionally be reinforced with fibrous fillers, for example aramid (polyethylene terephthalate) fibrils, particularly in order to impart characteristics of anisotropy to the diaphragm.

The thickness of the said diaphragm is preferably in the range from 1 to 5 mm, including the ends.

The characteristics of elasticity of the diaphragm according to the invention, when mounted on the toroidal support, preferably comprise a transverse (axial) stretch in the range from 1% to 5% inclusive, and a longitudinal (circumferential) stretch in the range from 3% to 15% inclusive.

The diaphragm according to the present invention is provided with at least one, but preferably three, coupling devices, and even more preferably six coupling devices for fastening to the toroidal support. The said coupling devices are to be inserted into corresponding holes formed in the same sector of the toroidal support. Even more preferably, they are arranged in pairs, with the elements of each pair aligned in the axial direction, each pair lying in a different plane of radial section of the toroidal support.

The said coupling devices are in the form of elongate branches of the diaphragm, terminating in a suitably enlarged portion whose dimensions are greater than those of the corresponding hole present in the surface of the toroidal support.

The fastening devices located along the edges of the diaphragm according to the invention are in the form of thickenings which are complementary to guides, which will be discussed below, present in the toroidal support; each of the said fastening devices has a volume slightly greater than the capacity of each of the said guides. Preferably, it also has a circumferential extension which is smaller than that of each of the said guides.

The rigid dismountable toroidal support for building a tyre, consists of sectors provided with channels for the passage of the vulcanization fluid, and provided with two guides at the ends of the crown surface, which are parallel to the circumferential direction of the toroidal support, and which are arranged on each sector in such a way as to form two continuous circumferential grooves on the surface of the said support.

One of the said sectors also has at least one hole for the insertion of a corresponding coupling device of the diaphragm described above.

From this point onwards, the sector of the toroidal support which comprises the aforesaid hole, for coupling to the diaphragm according to the invention, is more briefly called the "supporting sector".

In another aspect, the present invention relates to an assembly station for a device for moulding a green tyre as from claim 29.

Preferably, the shaft mentioned therein has, along its longitudinal extension, in a position separate from the plane tangential to the side of the said toroidal support, an element which can interrupt its longitudinal continuity, such as a particular configuration of its extension or an accessory, suitably mounted along the longitudinal extension of the said shaft.

A further aspect of the present invention relates to a method of moulding a green tyre as from claim 12.

A further aspect of the present invention relates to a method of removing a moulding device, as from claim 19.

Preferably, the removal of the supporting sector is preceded by the removal of the sector diametrically opposite it. More preferably, the removal of one sector follows the removal of the sector diametrically opposite it. Even more preferably, the removal of one sector follows the removal of a sector not adjacent to it.

The vacuum created between the toroidal support and the diaphragm according to the invention is such that the said diaphragm is made to adhere to the surface of the toroidal support, from which it has moved away as a result of the radial thrust exerted by the fluid during vulcanization. The said vacuum is not sufficient to attract the surface of the vulcanized tyre. Preferably this vacuum is of the order of - 400 mm/Hg.

Yet another aspect of the present invention relates to a method for assembling the moulding device, as from claim 26.

The method can optionally comprise the step of removing the said shaft during or after step e).

The present invention will now be illustrated more clearly with reference to the following description and to the attached figures, which are all provided solely for explanatory purposes and without restriction of the invention. In the drawings,
Figure 1 shows in schematic radial section the moulding device according to the invention, provided with the green tyre to be vulcanized, inserted into a vulcanization mould of the conventional type;
Figure 2 shows in schematic radial section the device of Figure 1 in the situation in which it presses the said tyre against the radially inner surface of the said vulcanization mould;
Figure 3 shows a schematic plan view of a device according to Figure 1 before the diaphragm according to the invention is fitted on it;
Figure 4 shows a schematic view of the device of Figure 1 during the fitting of the diaphragm according to the invention on one of the sectors of the toroidal support;
Figure 5 shows a schematic view of one step of the mounting of a device according to the invention in the corresponding station.

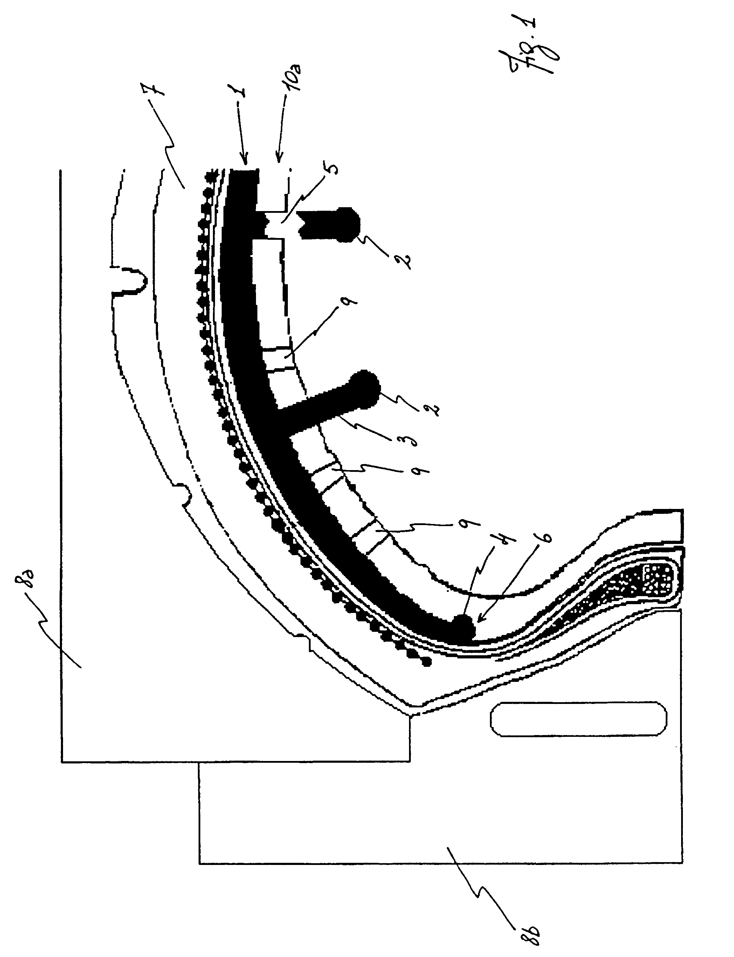

With reference to Figure 1, the tyre moulding and vulcanizing system according to the invention comprises, firstly, an outer mould and a toroidal support, carrying the green tyre to be vulcanized which is inserted into the said mould. The vulcanization mould is a conventional mould of the centripetal type, comprising two coaxial annular shells (8b) which are axially movable with respect to each other, and can act on the sidewalls of the said tyre (7), and a circumferential ring of dies (8a) which carry the negative impression of the tread design and are radially movable in both directions with respect to the axis of the said mould, the ring being able to act on the crown portion of the said tyre.

A rigid dismountable toroidal support, on which a green tyre has been built during preceding stages of operation, according to the procedure described in EP 928 680 (in the name of the applicant) for example, is inserted into the said mould.

The aforesaid toroidal support comprises a plurality of circumferential sectors (10) [Fig. 1 shows specifically the supporting sector 10a] having a convex radially outer surface, essentially matching the radially inner surface of the tyre. Each sector (10) has in its crown portion at least one but preferably a plurality of channels (9) for the injection of the vulcanization fluid, fed from the interior of the toroidal support, into a space generated between the radially outer surface of the support and the radially inner surface of a diaphragm (1) which covers the said support.

On the radially outer surface of each sector (10), in the area of transition between the sidewall portion and the crown portion, there is formed a guide (6) having a circumferential extension, which, together with the similar guides of the adjacent sectors, forms a continuous circumferential groove on each side of the toroidal sector.

More particularly, the said guides (6) are formed on the lateral surfaces of the sector (10) in a position lying within the sidewall portion which is moulded at constant volume.

Preferably, the said sectors (10) do not have the same circumferential extension, but are divided into two groups with different extensions, and alternate in the structure of the support in a succession of long sectors and short sectors.

A flexible diaphragm (1) covers the said toroidal support: it is conveniently made from elastic material, which is heat-resistant, chemically inert and impermeable to the vulcanization fluid. It is in the form of a circumferential band having dimensions such that it can cover at least the crown surface: for this purpose, the material of the said diaphragm is preferably butyl, natural or silicone rubber, or mixtures of these.

The said material can optionally comprise suitable reinforcing fillers, preferably fibrous fillers such as natural or synthetic, organic or inorganic fibres, or combinations of these, such as rayon, nylon, carbon-glass or steel, particularly in order to impart characteristics of anisotropy to the diaphragm. The applicant has found it preferable to use aramid (polyethylene terephthalate) fibrils, known by the brand name of Kevlar®, a registered trademark of DuPont.

The characteristics of elasticity of the said diaphragm, measured when it is mounted on the toroidal support, preferably comprise a transverse (axial) stretch in the range from 1% to 5% inclusive, and a longitudinal (circumferential) stretch in the range from 8% to 10% inclusive.

The said diaphragm is provided with at least one coupling device (3) for fastening to the supporting sector (10a) : the said coupling device (3) is preferably made with an elongate sprue of the material of the said diaphragm (1), which protrudes in an essentially perpendicular direction from the radially inner surface of the said diaphragm (1) and is inserted into a corresponding hole (5) formed in the said supporting sector (10a). The said appendage terminates in a suitable enlarged end (2) having dimensions greater than those of the hole (5), in order to impede the detaching of the said diaphragm (1) from the said carrying support (10a); the sprue has a length such that the diaphragm can move away from the radially outer surface of the said support under the effect of the vulcanization fluid injected between the support and the diaphragm (1) through the aforesaid channels (9).

As explained in greater detail below, the said diaphragm (1) must be cyclically removed from and subsequently fitted on to the sectors (10) of the said support, and when fitted, must be able to expand as a result of the said injection of the vulcanization fluid, without loss of the fastening to the toroidal support. For this purpose, the diaphragm (1) is preferably provided with fastening devices (4) located along the lateral portions, hereafter termed "edges", of the said band, which interact with the guides (6) present in the sectors of the toroidal support. Preferably, the said fastening devices (4) comprise thickenings of the edges of the said band, having a complementary configuration to that of the said guides (6): preferably, when the diaphragm is at rest, the said thickenings have a volume slightly greater than the volume of the said guides (6); preferably, they also have a circumferential extension smaller than that of the said guides (6).

Thus, when the diaphragm (1) is stretched, as will be made clear below, in order to fit it on to the toroidal support, the volume of the aforesaid fastening devices (4) becomes slightly less than that of the corresponding guides (6), and are therefore inserted into the said guides without particular difficulty, while, when they are housed in the said guides (6), they are subject to a state of compression which impedes their exit from the said guides.

The cross-sectional profile of the guides (6) is combined with the profile of the diaphragm (1) at the position of the lateral thickenings in such a way as to generate a profile of the outer surface of the toroidal support with an essentially continuous curvature, which prevents moulding imperfections of the corresponding radially inner surface portion of the tyre.

Figure 1 shows the diaphragm (1) mounted on the supporting sector (10a) which, in turn, is already an integral part of a rigid dismountable toroidal support, on which the green tyre has been built (7). The whole is inserted into a moulding chamber formed by coupling the external mould (8a, 8b) to the toroidal support (the inner part). The figure shows how the volume of the moulding cavity formed between the surface of the shells (8b) and that of the side of the toroidal support is essentially identical to the volume of the portion of tyre contained in it, so that, in the said cavity, the moulding of the tyre takes place at constant volume. On the other hand, the volume of the moulding cavity formed between the radially inner surface of the dies (8a) and that of the crown portion of the toroidal support is greater than the volume of the portion of tyre contained in it, so that, in this cavity, the moulding of the tyre takes place by expansion of the tyre against the radially inner surface of the said dies (8a). This expansion, which is variable in the range of approximately 0.5%-5%, depending on the type of tyre being vulcanized, imparts the correct stretch to the materials and to the structure of the tyre, which is important for the behaviour of the tyre in use.

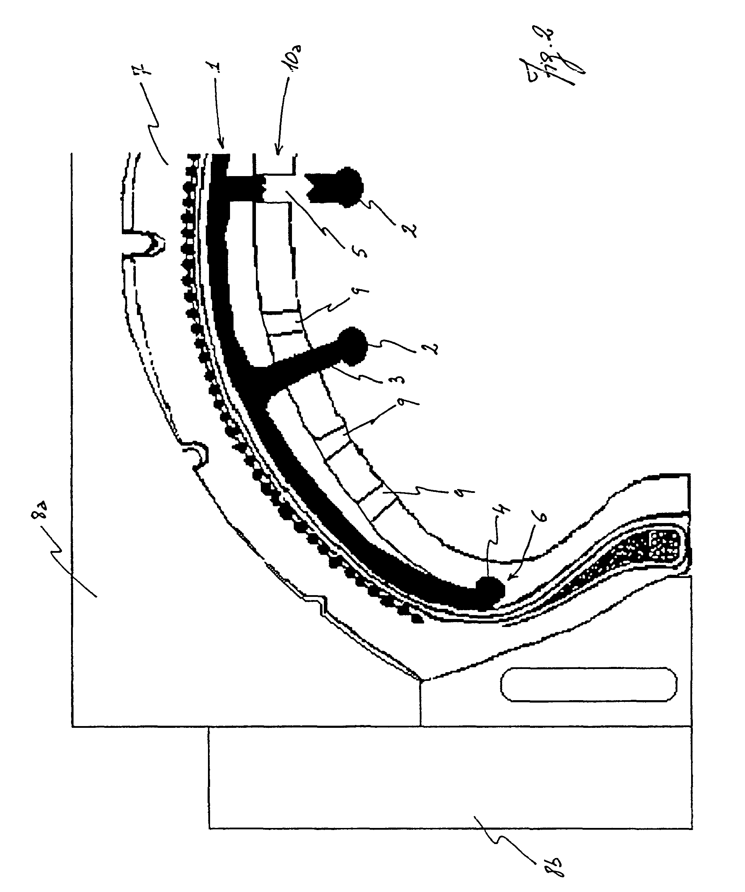

Figure 2 shows the expansion described above: the injection of the vulcanization fluid through the channels (9) pushes the diaphragm (1) and the corresponding crown portion of the tyre (7) against the inner surface of the mould. The diaphragm (1) is allowed to move away from the surface of the supporting sector (10a) by the sliding of the coupling device (3) through the hole (5). Preferably, the extension of the sprue is chosen in such a way that the enlarged head (2) of the said coupling device (3) does not encounter the inner surface of the supporting sector (10a) during the said movement of the diaphragm (1) away from the outer surface of the said sector (10a).

Now that the moulding device according to the invention has been disclosed, we can illustrate some aspects of the cycle of operations connected with the process of moulding the tyre and with the movement of the toroidal support, to the extent that they are specifically affected by the use of the said device; the moulding process, which is known in its general characteristics, is carried out, for example, according to what taught in patent application EP 976 533 in the name of the present applicant, and therefore certain details which are not relevant to the present invention have been omitted.

The green tyre (7) is built directly on the toroidal support provided with the diaphragm (1); the building process, which is known in its general characteristics, is carried out, for example, according to what taught in patent application EP 928 680 in the name of the present applicant, and is not described in detail here, since it is not relevant to the present invention.

The toroidal support fitted with the said green tyre (7) is inserted into the vulcanization mould, where the moulding and vulcanization of the tyre take place in the way mentioned above. At the end of the vulcanization cycle, after the vulcanization fluid has been discharged from the toroidal support, the diaphragm remains generally adhering to the inner surface of the vulcanized tyre (7). The next step is to create a vacuum in the space between the toroidal support and the diaphragm (1) by means of the channels (9), preferably while the mould remains closed. This vacuum, because of the state of tension present in the diaphragm (1) as a result of the preceding expansion, has the effect of detaching the diaphragm from the inner surface of the tyre (7) and contracting it on to the outer surface of the toroidal support. Clearly, the level of the said vacuum is not such as to cause a deformation of the radially inner surface of the vulcanized tyre.

The said support is then extracted from the mould and placed in a dismantling station, where the support is extracted from the tyre, which is sent to the subsequent operations of inspection and finishing.

In particular, the individual sectors (10) which make up the support are extracted in succession, preferably with an alternation of sectors having different circumferential extensions, leaving the supporting sector (10a) till last. Preferably, the said supporting sector (10a) is a sector with a short circumferential extension: it is left till last because the presence of the diaphragm (1) fastened to it would impede the correct extraction of the said supporting sector from the tyre while other sectors remained in place. In practice, either the diaphragm would be detached from the said supporting sector, or it would tear. This could also impede the subsequent operations of reassembling the moulding device.

More preferably, the dismantling starts with the sector diametrically opposite the supporting sector (10a), and then continues with one of the sectors adjacent to the said supporting sector (10a), and then with the sector diametrically opposite, and so on, in a "non-adjacent/opposite" sequence, until the supporting sector (10a) is removed.

Alternatively, the dismantling can start with any sector other than the supporting one (10a), and continue in a "non-adjacent/opposite" or "opposite/non-adjacent" sequence.

The sectors (10) are extracted from the tyre by a radial movement towards the axis of the tyre, until each sector is released from the interference with the beads, and then removed in the axial direction and placed in an adjacent assembly station, where the moulding device is reassembled.

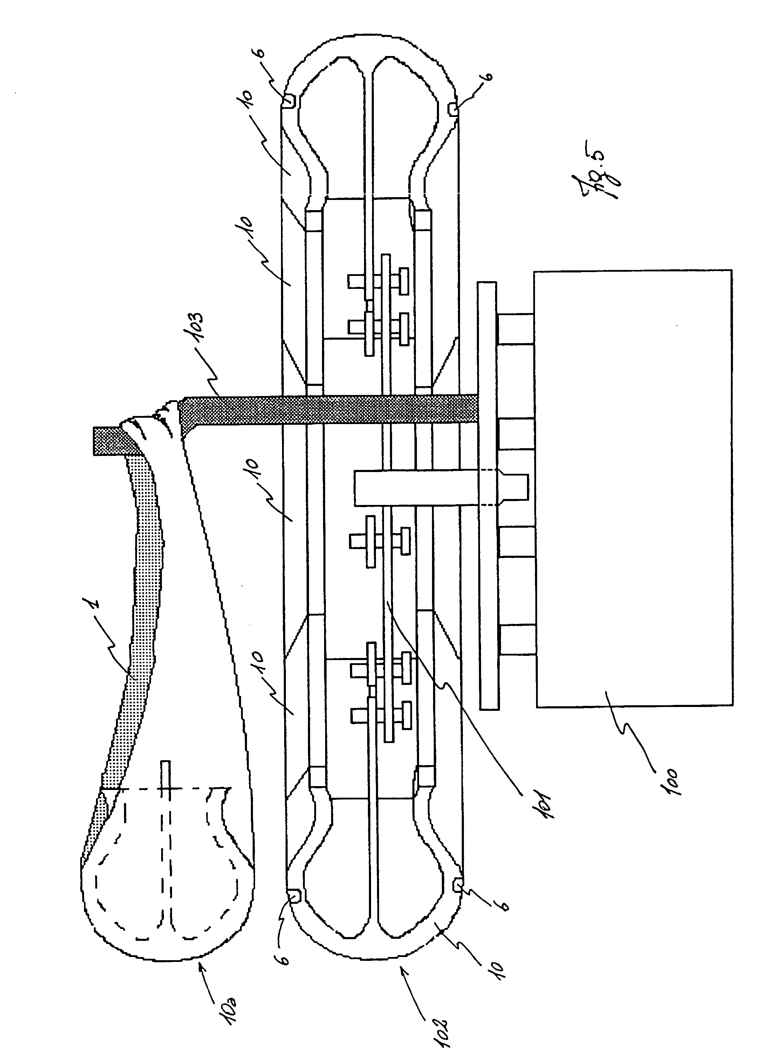

Figure 5 shows schematically the aforesaid assembly station: this comprises a base (100) on which is positioned a flange (101) supporting at least one fastening member for engagement with a device for handling the said support (102), on which the sectors (10) of the toroidal support are mounted as they are extracted from the vulcanized tyre (7), preferably in the same sequence as that of the dismantling. When all the sectors (10) have been positioned on the flange (101), the diaphragm (1) is fitted, as described in greater detail below, and then a corresponding counter-flange is fitted in a position axially opposite the said flange (101), so that it locks and compacts the said plurality of sectors (10) into a rigid toroidal support (102), by means of engagement elements which firmly hold the sectors between the said flange and counter-flange.

A shaft (103) is mounted on the said base (100) within the circumference delimited by the set of the said sectors (10), preferably in a position diametrically opposite that which will be occupied by the supporting sector (10a). The said shaft (103), being axially extended beyond the plane tangential to the side of the said support, projects by a certain distance, on the side axially opposite the base, with respect to the ring of sectors (10); preferably it has, along its longitudinal extension, in a position distant from and raised above the plane tangential to the side of the said toroidal support, an element which can interrupt its longitudinal continuity, which in the illustrated case advantageously consists of a cranked configuration.

A person skilled in the art will understand that this configuration, whose purpose is made clear in the remainder of the present description, can alternatively be replaced by a different configuration or by an accessory, for example a plug or a ring suitably mounted along the rectilinear longitudinal extension of the said shaft.

At least one robotic arm (104) is provided in the proximity of the said station to act on the said sectors (10), and in particular to pick them up from the dismantling station and to position them at the assembly station.

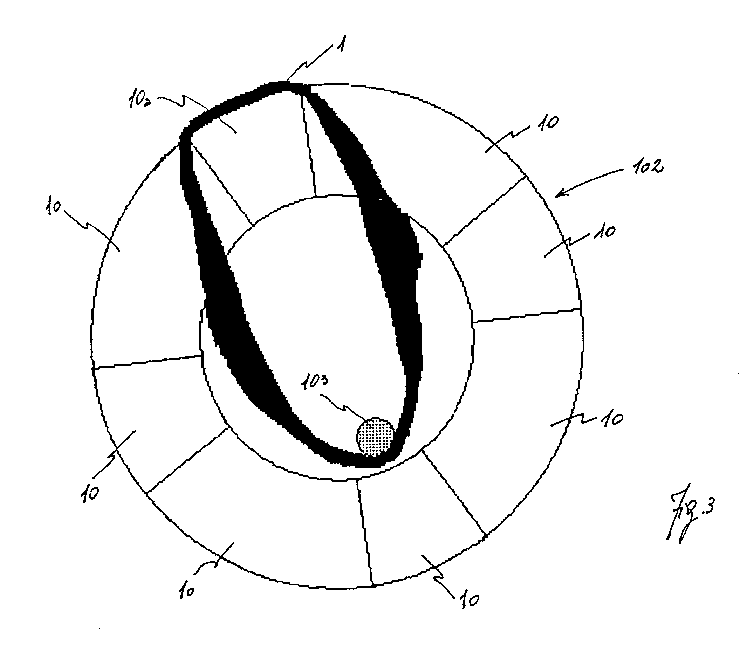

Figure 3 shows, schematically in plan view, the toroidal support reassembled in the said assembly station, before the diaphragm (1) is fitted on to the ring of sectors (10).

The supporting sector (10a) has already been inserted in its specified position in the ring of sectors (10), but the diaphragm (1) still lies loosely on the lateral surface of the toroidal support axially opposite the base (100).

Now that the structure of the assembly station is known, it will be easy to understand the method of assembling the sectors (10) and of fitting the diaphragm (1) on to the corresponding support.

As stated above, the robotic arm (104) picks up the sectors (10) individually, in sequence, from the dismantling station, and places them, preferably in the same sequence, on the assembly station.

The last sector to be picked up is the supporting sector (10a), provided with the diaphragm (1) which, during the transfer, hangs loosely from the radially outer surface of the said sector. The robotic arm (104) moves the said sector (10a) by means of a set of movements of rotation and/or translation in space, in such a way as to make it follow a path along which the diaphragm (1) contacts the said shaft (103) and is retained by it, while the supporting sector (10a) continues to approach its specified position in the ring of sectors (10).

In the said position, the sector (10a) is at a height above that of the ring of sectors, and is then vertically lowered towards the toroidal support in such a way that it is inserted into the said ring, while the diaphragm, being retained by the particular configuration of the said shaft (103), remains in a position raised above the ring of sectors (10), thus preventing interference and possible pinching between sectors.

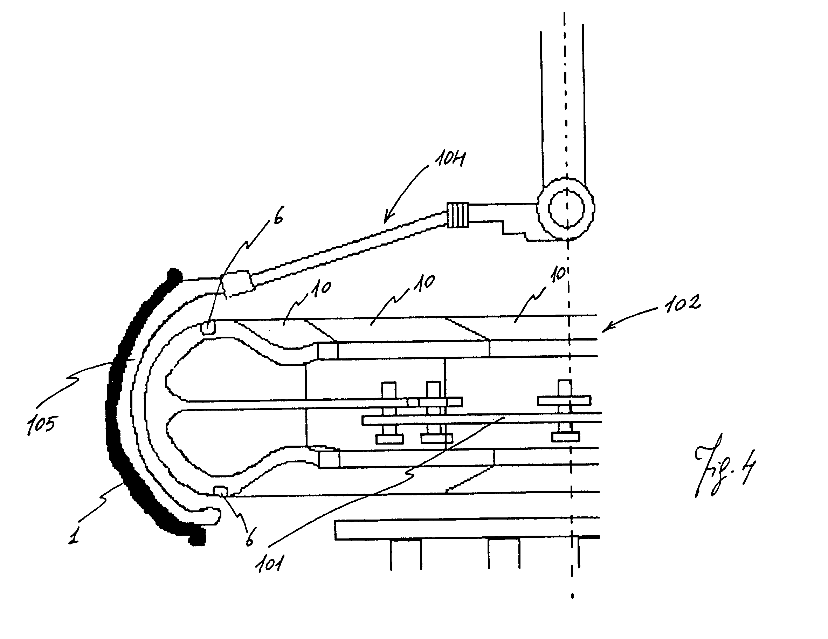

At this point, the said robotic arm (104) or other robotic arm inserts a laminar tool, preferably curved, into the perimeter defined by the diaphragm, in the proximity of the supporting sector (10a). The said laminar tool is in the form of a curved spatula, hereinafter termed as "spatula" (105) (see Figure 4), having a curvature essentially equal to that of the support, a longitudinal extension essentially equal to the axial dimension of the crown surface of the sectors (10), and corners (angles of joining between the contiguous surfaces) which are essentially rounded. In order to facilitate the sliding of the diaphragm on its outer surface, it preferably consists of, or is covered with, an anti-friction material, such as Teflon® (polytetrafluoroethylene).

The spatula (105) moves the wall of the said diaphragm (1) radially outwards until it is carried outside the crown surface of the support (102); at this point, the spatula (105) is moved axially along the said crown surface until it completely covers it, drawing with it the wall of the diaphragm (1).

The robotic arm (104) then moves the said spatula (105) along the radially outer surface of the toroidal support (102), through a practically complete rotation around the said surface, in other words through an angle essentially equal to 360°, thus fitting the diaphragm (1) on to the said surface.

This angular movement of the spatula (105) puts the diaphragm (1), retained by the shaft (103), into a state of circumferential elastic tension, causing a decrease in the volume of the thickenings which thus, as the said spatula (105) moves away from each sector (10), are easily accommodated in the guides (6). The operation of fitting the diaphragm (1) is assisted by the fact that the sectors (10) of the toroidal support (102) are not yet locked during the said angular movement of the robotic arm (104), and therefore the play permitted between them by the absence of locking facilitates the combined positioning of the diaphragm (1) and the support (102).

After the spatula (105), during its rotation, has passed the shaft (103), the latter can be moved to another position, so that it does not interfere with the subsequent operations of locking the support (102). This repositioning of the shaft (103) is made possible by the fact that the diaphragm (1) is now firmly held over at least half of its circumferential extension by the corresponding portion of the support (102) on which it has been fitted. However, the said shaft (103) is preferably removed at the end of the fitting operation, by means of the robotic arm (104) which has previously moved the spatula (105).

On completion of the said fitting operation, the spatula (105) is extracted and the robotic arm (104) is moved away from the assembly station, before the toroidal support (102) is locked between the flange and counter-flange, as stated above, this operation being carried out by the engagement devices which compact the said plurality of sectors (10) into a rigid toroidal support (102).

To summarize, the operation of assembling the toroidal support (102) comprises the following steps. The supporting sector (10a) is offered up last for assembly, in other words after all the other sectors (10) have already been positioned in their housings, in the same sequence as that followed during the operation of dismantling the toroidal support (102) on completion of the vulcanization. The said supporting sector (10a), from which the diaphragm (1), connected to it by means of the fastening devices (4) and coupling devices (3), hangs loosely, is brought towards its insertion point essentially along a path which encounters the shaft (103) in such a way that the said diaphragm (1) is intercepted and retained by the said shaft (103). The supporting sector (10a) continues to approach the corresponding insertion point: thus the diaphragm (1), intercepted by the shaft (103) and retained by the element which interrupts the longitudinal continuity of the shaft, assumes a position essentially parallel to the plane tangential to the side of the said toroidal support (102), while remaining loose. The positioning of the supporting sector (10a) in its housing causes the whole of the diaphragm (1) to slide above the side of the toroidal support (102), with the exception of the portion directly connected to the crown of the supporting sector (10a) by the fastening devices (4) and coupling devices (3). At this point, the robotic arm (104) intervenes, carrying the spatula (105) which is introduced between the radially inner surface of the said diaphragm (1) and the radially outer surface of a sector (10) adjacent to the said supporting sector (10a). The rotation of the said robotic arm (104) around the said support (102), through an angle essentially equal to 360°, causes the diaphragm (1) to be coupled to the guides (6) of all the sectors (10) of the said toroidal support (102). On completion of the fitting operation, the robotic arm (104) carrying the spatula (105) is moved away, and the sectors (10) of the support (102) are locked by methods which have already been illustrated. The removal of the shaft (103) can take place during the rotation of the robotic arm (104), precisely when the arm has travelled through an angle of more than 180°, or, alternatively, the said shaft (103) is removed on completion of the fitting.

The diaphragm according to the invention can be used for a plurality of moulding operations; when worn, it can be replaced on the supporting sector without difficulty, by detaching the coupling device from the corresponding hole and inserting the coupling device of a new diaphragm into the said hole.

As stated above, the use of the diaphragm according to the invention makes it possible to mould a green tyre in an automated system making use of a rigid toroidal support for building the green tyre, and of a vulcanization fluid, thus preventing problems due to corrosion or penetration of the said fluid in the green tyre.

Furthermore, the use of this diaphragm, because of its simplicity of construction and operation, and the low cost of the materials from which it can be made, does not represent a complication of automatic tyre production, and actually improves the profitability of the production process in terms of the ratio between produced and rejected items.

## Claims

1. Device for moulding a green tyre, comprising:
- a rigid dismountable toroidal support (102) for building tyres comprising a plurality of circumferential sectors (10,10a) provided with channels (9) for the passage of vulcanisation fluid, at least one of said sectors, supporting sector (10a), having at least one hole(5);
- a flexible diaphragm (1) of elastic material, which is heat-resistant, chemically inert, and impermeable to the vulcanisation fluid, in form of a circumferential band having dimensions such to cover at least the crown surface of the toroidal support (102) and provided with at least one coupling device (3) protruding essentially from its radially inner surface, inserted into said at least one hole (5) and terminating with an enlarged portion (2) whose dimensions are greater than those of said at least one hole (5); and
- a vulcanisation mould housing the rigid toroidal support (102).

2. Device for moulding a green tyre according to claim 1 wherein the sectors (10,10a) are provided with two guides (6) at the ends of the crown surface, which are parallel to the circumferential direction of the toroidal support (102), and which are arranged on each sector (10,10a) in such a way to form two continuous circumferential grooves on the surface of the said support (102).

3. Device for moulding a green tyre according to claim 1 wherein diaphragm (1) is provided with fastening devices (4) located along the edges of the said band, to be fitted in guides (6) according to claim 2.

4. Device for moulding a green tyre according to claim 1 wherein diaphragm (1) is made from material selected from the group comprising butyl, natural or silicone rubber, and mixtures of these.

5. Device for moulding a green tyre according to claim 1 wherein the material of diaphragm (1) is reinforced with aramid fibrils.

6. Device for moulding a green tyre according to claim 1 wherein diaphragm (1) has when mounted on the toroidal support (102), a transverse stretch in the range from 1% to 5% inclusive.

7. Device for moulding a green tyre according to claim 1 wherein diaphragm (1) has when mounted on the toroidal support (102), a longitudinal stretch in the range from 3% to 15% inclusive.

8. Device for moulding a green tyre according to claim 1 wherein said coupling devices (3) are at least three.

9. Device for moulding a green tyre according to claim 8 wherein said coupling devices (3) six.

10. Device for moulding a green tyre according to claim 1 wherein said coupling devices (3) are provided in pairs.

11. Device for moulding a green tyre according to Claim 10, wherein the elements of each pair are axially adjacent, each pair lying in a different plane of radial section of the toroidal support(102).

12. Method for moulding a green tyre on a moulding device comprising the steps of
a) building a green tyre (7) directly on a rigid dismountable toroidal support (102) comprising a plurality of circumferential sectors (10,10a) provided with channels (9) for the passage of vulcanisation fluid, at least one of said sectors (10,10a) having at least one hole (5), said toroidal support (102) being provided with a flexible diaphragm (1) of elastic material, which is heat-resistant, chemically inert, and impermeable to the vulcanisation fluid, in form of a circumferential band having dimensions such to cover at least the crown surface of the toroidal support (102)and provided with at least one coupling device (3) protruding essentially from its radially inner surface, inserted into said at least one hole (5) and terminating with an enlarged portion (2) whose dimensions are greater than those of said at least one hole (5);
b) inserting the toroidal support (102) fitted with the said green tyre (7) into the vulcanisation mould;
c) moulding and vulcanising the tyre (7);
d) creating a vacuum between the toroidal support (102) and the diaphragm (1) for contracting the diaphragm (1) on to the toroidal support (102);
e) dismantling the said support (102), said at least one sector (10,10a) having at least one hole (5) being removed as last.

13. Method according to Claim 12, wherein the removal of said at least one sector (10,10a) having at least one hole (5) is preceded by the removal of the sector (10) diametrically opposite it.

14. Method according to Claim 12, wherein the removal of one sector (10) follows the removal of the sector (10) diametrically opposite it.

15. Method according to Claim 12, wherein the removal of one sector (10) follows the removal of a sector (10) not adjacent to it.

16. Method according to Claim 12, wherein the said sectors (10,10a) are removed in an "opposite/non-adjacent" sequence.

17. Method according to Claim 12, wherein the said vacuum is of the order of -400 mm/Hg.

18. Method according to Claim 12, wherein the said sectors (10,10a) are removed with the alternation of sectors (10,10a) having different circumferential extensions.

19. Method of removing a device for moulding a green tyre as described in Claim 1 from the interior of a vulcanised tyre (7), comprising the steps of:
a) creating a vacuum between the toroidal support (102) and the diaphragm (1) for contracting the diaphragm (1) on to the toroidal support (102);
b) dismantling the said support (102), said at least one sector (10,10a) having at least one hole (5) being removed as last.

20. Method according to Claim 19, wherein the removal of said at least one sector (10,10a) having at least one hole (5) is preceded by the removal of the sector (10) diametrically opposite it.

21. Method according to Claim 19, wherein the removal of one sector (10) follows the removal of the sector (10) diametrically opposite it.

22. Method according to Claim 19, wherein the removal of one sector (10) follows the removal of a sector (10) not adjacent to it.

23. Method according to Claim 19, wherein the said sectors (10,10a) are removed in an "opposite/non-adjacent" sequence.

24. Method according to Claim 19, wherein the said vacuum is of the order of -400 mm/Hg.

25. Method according to Claim 19, wherein the said sectors (10,10a) are removed with the alternation of sectors (10,10a) having different circumferential extensions.

26. Method for assembling a device for moulding a green tyre as described in Claim 1, comprising the steps of:
a) offering up said at least one sector (10,10a) having at least one hole (5) as the last one to be assembled;
b) bringing said at least one sector (10,10a) having at least one hole (5) towards its insertion site essentially along a path which encounters a shaft (103) in such a way that the said diaphragm (1) is intercepted and retained by the said shaft (103);
c) continuing the approaching of said at least one sector (10,10a) having at least one hole (5) until it is positioned in its insertion site;
d) introducing a spatula (105), connected to a robotic arm (104), between the said diaphragm (1) and the outer surface of a sector (10) adjacent to said at least one sector (10,10a) having at least one hole (5) ;
e) rotating the said robotic arm (104) about the said support (102) through an angle of essentially 360° in such a way that the diaphragm (1) is coupled to guides of all the sectors (10,10a) of the said toroidal support (102);
f) removing the said spatula (105).

27. Method according to Claim 26, comprising the step of removing the said shaft (103) during step e).

28. Method according to Claim 26, comprising the step of removing the said shaft (103) after step e).

29. Assembly station of a device for moulding a green tyre (7), comprising
- a rigid dismountable toroidal support (102) comprising a plurality of circumferential sectors (10,10a) provided with channels (9) for the passage of vulcanisation fluid, at least one of said sectors (10,10a) having at least one hole (5), and;
- a flexible diaphragm (1) of elastic material, which is heat-resistant, chemically inert, and impermeable to the vulcanisation fluid, in form of a circumferential band having dimensions such to cover at least the crown surface of the toroidal support (102)and provided with at least one coupling device (3) protruding essentially from its radially inner surface, inserted into said at least one hole (5) and terminating with an enlarged portion (2) whose dimensions are greater than those of said at least one hole (5),
wherein said assembly station comprises a base (100) on which the sectors (10,10a) extracted from a vulcanised tyre (7) are placed to be assembled together to reconstruct the toroidal support (102), a shaft (103) located within the circumference delimited by said sectors (10,10a), essentially in a position diametrically opposite that of said at least one sector (10,10a) having at least one hole (5) and supporting the diaphragm (1), axially extending beyond the plane tangential to the side of the said support (102), and at least one robotic arm (104) provided with a spatula (105) for fitting the diaphragm (1) around the said support (102).

30. Assembly station according to Claim 29, wherein said shaft (103) has, along its longitudinal extension, in a position separate from the plane tangential to the side of the said toroidal support (102), an element interrupting its longitudinal continuity.

31. Assembly station according to Claim 30, wherein the said element is a configuration of the extension of the said shaft (103).

32. Assembly station according to Claim 30, wherein the said element is an accessory mounted along the longitudinal extension of the said shaft.

## Patentansprüche

1. Vorrichtung zum Ausformen eines Rohreifens
- mit einem starren zerlegbaren toroidförmigen Träger (102) zum Herstellen von Reifen, wobei der Träger eine Vielzahl von Umfangssektoren (10, 10a) aufweist, die mit Kanälen (9) für den Durchgang eines Vulkanisierfluids versehen sind, und wenigstens einer der Sektoren , der tragende Sektor (10a), wenigstens ein Loch (5) aufweist,
- mit einer flexiblen Membran (1) aus elastischem Material, die hitzebeständig, chemisch inert und für das Vulkanisierfluid undurchlässig ist und die die Form eines Umfangsbandes aufweist, das solche Abmessungen hat, dass es wenigstens die Kronenfläche des toroidförmigen Trägers (102) abdeckt, und die mit wenigstens einer Verbindungseinrichtung (3) versehen ist, die von ihrer radial inneren Oberfläche wesentlich vorsteht, in das wenigstens eine Loch (5) eingeführt ist und in einem vergrößerten Abschnitt (2) endet, dessen Abmessungen größer sind als diejenigen des wenigstens einen Loches (5), und
- mit einer Vulkanisierform, die den starren toroidförmigen Träger (102) aufnimmt.

2. Vorrichtung zum Ausformen eines Rohreifens nach Anspruch 1, bei welcher die Sektoren (10, 10a) mit zwei Führungen (6) an den Enden der Kronenfläche versehen sind, die parallel zur Umfangsrichtung des toroidförmigen Trägers (102) sind und die an jedem Sektor (10, 10a) so angeordnet sind, dass sie zwei fortlaufende Umfangsnuten auf der Oberfläche des Trägers (102) bilden.

3. Vorrichtung zum Ausformen eines Rohreifens nach Anspruch 1, bei welcher die Membran (1) mit längs der Ränder des Bandes angeordneten Befestigungseinrichtungen (4) für das Einpassen in die Führungen (6) nach Anspruch 2 versehen ist.

4. Vorrichtung zum Ausformen eines Rohreifens nach Anspruch1, bei welcher die Membran (1) aus einem Material hergestellt ist, das aus der Gruppe ausgewählt ist, die Butyl, -Natur- oder Silikonkautschuk sowie Mischungen davon aufweist.

5. Vorrichtung zum Ausformen eines Rohreifens nach Anspruch 1, bei welcher das Material der Membran (1) mit Aramidfeinfasern verstärkt ist.

6. Vorrichtung zum Ausformen eines Rohreifens nach Anspruch 1, bei welcher die Membran (1), wenn sie an dem toroidförmigen Träger (102) montiert ist, eine Querdehnung im Bereich von 1% bis 5% inklusive hat.

7. Vorrichtung zum Ausformen eines Rohreifens nach Anspruch 1, bei welcher die Membran (1), wenn sie auf dem toroidförmigen Träger (102) montiert ist, eine Längsdehnung im Bereich von 3% bis 15% inklusive hat.

8. Vorrichtung zum Ausformen eines Rohreifens nach Anspruch 1, bei welcher wenigstens drei Verbindungseinrichtungen (3) vorgesehen sind.

9. Vorrichtung zum Ausformen eines Rohreifens nach Anspruch 8, bei weicher sechs Verbindungseinrichtungen (3) vorgesehen sind.

10. Vorrichtung zum Ausformen eines Rohreifens nach Anspruch 1, bei welcher die Verbindungseinrichtungen (3) paarweise vorgesehen sind.

11. Vorrichtung zum Ausformen eines Rohreifens nach Anspruch 10, bei welcher die Elemente eines jeden Paars axial benachbart sind und jedes Paar in einer anderen Radialschnittebene des toroidförmigen Trägers (102) liegen.

12. Verfahren zum Ausformen eines Rohreifens auf einer Ausformvorrichtung, welches die Schritte aufweist
a) Herstellen eines Rohreifens (7) direkt auf einem starren zerlegbaren toroidförmigen Träger (102), der eine Vielzahl von Umfangssektoren (10, 10a) aufweist, die mit Kanälen (9) für den Durchgang eines Vulkanisierfluids versehen sind, wobei wenigstens einer der Sektoren (10, 10a) wenigstens ein Loch (5) aufweist, der toroidförmige Träger (102) mit einer flexiblen Membran (1) aus einem elastischen Material versehen ist, die hitzebeständig, chemisch inert und für das Vulkanisierfluid undurchlässig ist und die die Form eines Umfangsbandes aufweist, das solche Abmessungen hat, dass es wenigstens die Kronenfläche des toroidförmigen Trägers (102) abdeckt, und die mit wenigstens einer Verbindungseinrichtung (3) versehen ist, die von ihrer radial inneren Oberfläche wesentlich vorsteht, in das wenigstens eine Loch (5) eingeführt ist und in einem vergrößerten Abschnitt (2) endet, dessen Abmessungen größer sind als diejenigen des wenigstens einen Lochs (5),
b) Einführen des toroidförmigen Trägers (102) mit dem darauf angebrachten Rohreifen (7) in die Vulkanisierform,
c) Ausformen und Vulkanisieren des Reifens (7),
d) Erzeugen eines Vakuums zwischen dem toroidförmigen Träger (102) und der Membran (1) zum Zusammenziehen der Membran (1) auf dem toroidförmigen Träger (102), und
e) Zerlegen des Trägers (102), wobei der wenigstens eine Sektor (10, 10a) mit dem wenigstens einen Loch (5) als letzter entfernt wird.

13. Verfahren nach Anspruch 12, bei welchem dem Entfernen des wenigstens einen Sektors (10, 10a) mit dem wenigstens einen Loch (5) das Entfernen des ihm diametral gegenüberliegenden Sektors (10) vorausgeht.

14. Verfahren nach Anspruch 12, bei welchem das Entfernen des einen Sektors (10) dem Entfernen des ihm diametral gegenüberliegenden Sektors (10) folgt.

15. Verfahren nach Anspruch 12, bei welchem das Entfernen des einen Sektors (10) dem Entfernen eines nicht an ihn angrenzenden Sektors (10) folgt.

16. Verfahren nach Anspruch 12, bei welchem die Sektoren (10, 10a) in einer "gegenüberliegenden/nicht-aneinandergrenzenden" Folge entfernt werden.

17. Verfahren nach Anspruch 12, bei welchem das Vakuum die Größenordnung von -400 mm/Hg hat.

18. Verfahren nach Anspruch 12, bei welchem die Sektoren (10, 10a) mit der Abwechslung der Sektoren (10, 10a) entfernt werden, die unterschiedliche Umfangserstreckungen haben.

19. Verfahren zum Entfernen einer Vorrichtung zum Ausformen eines Rohreifens, wie sie in Anspruch 1 beschrieben ist, aus dem Innenraum eines vulkanisierten Reifens (7), wobei das Verfahren die Schritte aufweist
a) Erzeugen eines Vakuums zwischen dem toroidförmigen Träger (102) und der Membran (1), für ein Kontraktieren der Membran (1) auf dem toroidförmigen Träger (102), und
b) Zerlegen des Trägers (102), wobei der wenigstens eine Sektor (10, 10a) mit dem wenigstens einen Loch (5) als letzter entfernt wird.

20. Verfahren nach Anspruch 19, bei welchem dem Entfernen des wenigstens einen Sektors (10, 10a) mit dem wenigstens einen Loch (5) das Entfernen des ihm diametral gegenüberliegenden Sektors (10) vorausgeht.

21. Verfahren nach Anspruch 19, bei welchem das Entfernen des einen Sektors (10) dem Entfernen des ihm diametral gegenüberliegenden Sektors (10) folgt.

22. Verfahren nach Anspruch 19, bei welchem das Entfernen des einen Sektors (10) dem Entfernen eines nicht an ihn angrenzenden Sektors (10) folgt.

23. Verfahren nach Anspruch 19, bei welchem die Sektoren (10, 10a) in einer "gegenüberliegenden/nicht-aneinandergrenzenden" Folge entfernt werden.

24. Verfahren nach Anspruch 19, bei welchem das Vakuum die Größenordnung von -400 mm/Hg hat.

25. Verfahren nach Anspruch 19, bei welchem die Sektoren (10, 10a) mit der Abwechslung der Sektoren (10, 10a) entfernt werden, die unterschiedliche Umfangserstreckungen haben.

26. Verfahren zum Montieren einer Vorrichtung zum Ausformen eines Rohreifens, wie sie in Anspruch 1 beschrieben ist, wobei das Verfahren die Schritte aufweist:
a) Vorsehen des wenigstens einen Sektors (10, 10a) mit dem wenigstens einen Loch (5) als letzter bei Montage,
b) Bringen des wenigstens einen Sektors (10, 10a) mit dem wenigstens einen Loch (5) zu seiner Einführstelle im Wesentlichen längs einer Bahn, die einem Schaft (103) so begegnet, dass die Membran (1) von dem Schaft (103) abgefangen und gehalten wird,
c) Fortsetzen der Annäherung des wenigstens einen Sektors (10, 10a) mit dem wenigstens einen Loch (5), bis er an seiner Einführstelle positioniert ist,
d) Einführen einer mit einem Robotarm (104) verbundenen Spatel (105) zwischen die Membran (1) und die äußere Oberfläche eines Sektors (10) angrenzend an den wenigstens einen Sektor (10, 10a) mit dem wenigstens einen Loch (5),
e) Drehen des Robotarms (104) um den Träger (102) um einen Winkel von im Wesentlichen 360° derart, dass die Membran (1) mit den Führungen aller Sektoren (10, 10a) des toroidförmigen Trägers (102) verbunden wird, und
f) Entfernen des Spatels (104).

27. Verfahren nach Anspruch 26, welches den Schritt aufweist, den Schaft (103) während des Schritts e) zu entfernen.

28. Verfahren nach Anspruch 26, welches den Schritt aufweist, den Schaft (103) nach dem Schritt e) zu entfernen.

29. Montagestation für eine Vorrichtung zum Ausformen eines Rohreifens, wobei die Vorrichtung
- einen starren zerlegbaren toroidförmigen Träger (102) mit einer Vielzahl von Umfangssektoren (10, 10a), die mit Kanälen (9) für den Durchgang eines Vulkanisierfluids versehen sind, wobei wenigstens einer der Sektoren (10, 10a) wenigstens ein Loch (5) aufweist, und
- eine flexible Membran (1) aus elastischem Material aufweist, die hitzebeständig, chemisch inert und für das Vulkanisierfluid undurchlässig ist und die die Form eines Umfangsbandes hat, das solche Abmessungen aufweist, dass es wenigstens die Kronenfläche des toroidförmigen Trägers (102) abdeckt, und die mit wenigstens einer Verbindungseinrichtung (3) versehen ist, die von ihrer radial inneren Oberfläche wesentlich vorsteht, in das wenigstens eine Loch (5) eingeführt ist und mit einem vergrößerten Abschnitt (2) endet, dessen Abmessungen größer sind als diejenigen des wenigstens einen Lochs (5),
- wobei die Montagestation
-- eine Basis (100), an der die aus einem vulkanisierten Reifen herausgezogenen Sektoren (10, 10a) für die Montage angeordnet werden, um den toroidförmigen Träger (102) wieder aufzubauen,
-- einen Schaft (103), der innerhalb des von den Sektoren (10, 10a) begrenzten Umfangs im Wesentlichen in einer Position angeordnet ist, die zu der des wenigstens einen Sektors (10, 10a) mit dem wenigstens einen Loch (5) diametral gegenüberliegt, und der die Membran (1) trägt, die sich axial über die Ebene tangential zur Seite des Trägers (102) hinaus erstreckt, und
-- wenigstens einen Robotarm (104) aufweist, der mit einer Spatel (105) zum Anpassen der Membran (1) um den Träger (102) herum versehen ist.

30. Montagestation nach Anspruch 29, bei welcher der Schaft (103) auf seiner Längserstreckung in einer Position, die von der zu der Seite des toroidförmigen Trägers (102) tangentialen Ebene getrennt ist, ein Element aufweist, das seinen Längsverlauf unterbricht.

31. Montagestation nach Anspruch 30, bei welcher das Element eine Gestaltung der Erstreckung des Schaftes (103) ist.

32. Montagestation nach Anspruch 30, bei welcher das Element ein Zubehör ist, das auf der Längserstreckung des Schafts angebracht ist.

## Revendications

1. Dispositif pour le moulage d'un pneu non vulcanisé, comprenant :
- un support toroïdal rigide démontable (102) pour construire des pneus comprenant une pluralité de secteurs circonférentiels (10, 10a) munis de canaux (9) pour le passage d'un fluide de vulcanisation, au moins l'un desdits secteurs, secteur de support (10a), comportant au moins un trou (5) ;
- un diaphragme souple (1) en matériau élastique, qui est résistant à la chaleur, chimiquement inerte et imperméable au fluide de vulcanisation, sous la forme d'une bande circonférentielle ayant des dimensions lui permettant de couvrir au moins la surface de sommet du support toroïdal (102) et munie d'au moins un dispositif d'accouplement (3) faisant saillie essentiellement depuis sa surface radialement intérieure, inséré dans ledit au moins un trou (5) et se terminant par une partie élargie (2) dont les dimensions sont plus grandes que celles dudit au moins un trou (5) ; et
- un moule de vulcanisation dans lequel est logé le support toroïdal rigide (102).

2. Dispositif pour le moulage d'un pneu non vulcanisé selon la revendication 1, dans lequel les secteurs (10, 10a) sont munis de deux guides (6) aux extrémités de la surface de sommet, qui sont parallèles à la direction circonférentielle du support toroïdal (102), et qui sont placés sur chaque secteur (10, 10a) de manière à former deux rainures circonférentielles continues à la surface dudit support (102).

3. Dispositif pour le moulage d'un pneu non vulcanisé selon la revendication 1, dans lequel le diaphragme (1) est muni de dispositifs de fixation (4) situés le long des bords de ladite bande, destinés à être montés dans des guides (6) conformes à la revendication 2.

4. Dispositif pour le moulage d'un pneu non vulcanisé selon la revendication 1, dans lequel le diaphragme (1) est fait d'un matériau choisi dans l'ensemble comprenant le caoutchouc butyl, le caoutchouc naturel et les caoutchoucs silicone, et leurs mélanges.

5. Dispositif pour le moulage d'un pneu non vulcanisé selon la revendication 1, dans lequel le matériau du diaphragme (1) est renforcé par des fibrilles d'aramide.

6. Dispositif pour le moulage d'un pneu non vulcanisé selon la revendication 1, dans lequel le diaphragme (1) présente, lorsqu'il est monté sur le support toroïdal (102), un allongement transversal compris dans l'intervalle de 1 % à 5 % inclus.

7. Dispositif pour le moulage d'un pneu non vulcanisé selon la revendication 1, dans lequel le diaphragme (1) présente, lorsqu'il est monté sur le support toroïdal (102), un allongement longitudinal compris dans l'intervalle de 3 % à 15 % inclus.

8. Dispositif pour le moulage d'un pneu non vulcanisé selon la revendication 1, dans lequel lesdits dispositifs d'accouplement (3) sont au nombre d'au moins trois.

9. Dispositif pour le moulage d'un pneu non vulcanisé selon la revendication 8, dans lequel lesdits dispositifs d'accouplement (3) sont au nombre de six.

10. Dispositif pour le moulage d'un pneu non vulcanisé selon la revendication 1, dans lequel lesdits dispositifs d'accouplement (3) sont prévus par paires.

11. Dispositif pour le moulage d'un pneu non vulcanisé selon la revendication 10, dans lequel les éléments de chaque paire sont axialement adjacents, chaque paire se trouvant dans un plan différent de section radiale du support toroïdal (102).

12. Procédé de moulage d'un pneu non vulcanisé sur un dispositif de moulage, comprenant les étapes consistant à :
a) construire un pneu non vulcanisé (7) directement sur un support toroïdal rigide démontable (102) comprenant une pluralité de secteurs circonférentiels (10, 10a) munis de canaux (9) pour le passage d'un fluide de vulcanisation, au moins l'un desdits secteurs (10,10a) comportant au moins un trou (5), ledit support toroïdal (102) étant muni d'un diaphragme souple (1) en matériau élastique, qui est résistant à la chaleur, chimiquement inerte et imperméable au fluide de vulcanisation, sous la forme d'une bande circonférentielle ayant des dimensions lui permettant de couvrir au moins la surface de sommet du support toroïdal (102) et munie d'au moins un dispositif d'accouplement (3) faisant saillie essentiellement depuis sa surface radialement intérieure, inséré dans ledit au moins un trou (5) et se terminant par une partie élargie (2) dont les dimensions sont plus grandes que celles dudit au moins un trou (5) ;
b) insérer le support toroïdal (102), sur lequel est monté ledit pneu non vulcanisé (7), dans le moule de vulcanisation ;
c) mouler et vulcaniser le pneu (7) ;
d) créer une dépression entre le support toroïdal (102) et le diaphragme (1) pour contracter le diaphragme (1) sur le support toroïdal (102) ;
e) démonter ledit support (102), ledit au moins un secteur (10, 10a) comportant au moins un trou (5) étant retiré en dernier.

13. Procédé selon la revendication 12, dans lequel le retrait dudit au moins un secteur (10, 10a) comportant au moins un trou (5) est précédé du retrait du secteur (10) qui lui est diamétralement opposé.

14. Procédé selon la revendication 12, dans lequel le retrait d'un secteur (10) suit le retrait du secteur (10) qui lui est diamétralement opposé.

15. Procédé selon la revendication 12, dans lequel le retrait d'un secteur (10) suit le retrait d'un secteur (10) qui ne lui est pas adjacent.

16. Procédé selon la revendication 12, dans lequel lesdits secteurs (10, 10a) sont retirés selon une séquence "opposé - non adjacent".

17. Procédé selon la revendication 12, dans lequel ladite dépression est de l'ordre de -400 mmHg.

18. Procédé selon la revendication 12, dans lequel lesdits secteurs (10, 10a) sont retirés avec l'alternance de secteurs (10, 10a) ayant différentes extensions circonférentielles.

19. Procédé de retrait d'un dispositif pour le moulage d'un pneu non vulcanisé conforme à la revendication 1 de l'intérieur d'un pneu vulcanisé (7), comprenant les étapes consistant à :
a) créer une dépression entre le support toroïdal (102) et le diaphragme (1) pour contracter le diaphragme (1) sur le support toroïdal (102) ;
b) démonter ledit support (102), ledit au moins un secteur (10, 10a) comportant au moins un trou (5) étant retiré en dernier.

20. Procédé selon la revendication 19, dans lequel le retrait dudit au moins un secteur (10, 10a) comportant au moins un trou (5) est précédé du retrait du secteur (10) qui lui est diamétralement opposé.

21. Procédé selon la revendication 19, dans lequel le retrait d'un secteur (10) suit le retrait du secteur (10) qui lui est diamétralement opposé.

22. Procédé selon la revendication 19, dans lequel le retrait d'un secteur (10) suit le retrait d'un secteur (10) qui ne lui est pas adjacent.

23. Procédé selon la revendication 19, dans lequel lesdits secteurs (10, 10a) sont retirés selon une séquence "opposé - non adjacent".

24. Procédé selon la revendication 19, dans lequel ladite dépression est de l'ordre de -400 mmHg.

25. Procédé selon la revendication 19, dans lequel lesdits secteurs (10, 10a) sont retirés avec l'alternance de secteurs (10, 10a) ayant différentes extensions circonférentielles.

26. Procédé d'assemblage d'un dispositif pour le moulage d'un pneu non vulcanisé conforme à la revendication 1, comprenant les étapes consistant à :
a) fournir ledit au moins un secteur (10, 10a) comportant au moins un trou (5) comme le dernier à assembler ;
b) amener ledit au moins un secteur (10, 10a) comportant au moins un trou (5) vers son site d'insertion essentiellement le long d'un chemin qui rencontre un axe (103) de telle manière que ledit diaphragme (1) est intercepté et retenu par ledit axe (103) ;
c) continuer l'approche dudit au moins un secteur (10, 10a) comportant au moins un trou (5) jusqu'à ce qu'il soit positionné dans son site d'insertion ;
d) introduire une spatule (105), connectée à un bras robotisé (104), entre ledit diaphragme (1) et la surface extérieure d'un secteur (10) adjacent audit au moins un secteur (10, 10a) comportant au moins un trou (5) ;
e) faire tourner ledit bras robotisé (104) autour dudit support (102) sur un angle faisant globalement 360° d'une manière telle que le diaphragme (1) est couplé à des guides de tous les secteurs (10, 10a) dudit support toroïdal (102) ;
f) retirer ladite spatule (105).

27. Procédé selon la revendication 26, comprenant l'étape consistant à retirer ledit axe (103) pendant l'étape e).

28. Procédé selon la revendication 26, comprenant l'étape consistant à retirer ledit axe (103) après l'étape e).

29. Poste d'assemblage d'un dispositif pour le moulage d'un pneu non vulcanisé (7), comprenant :
- un support toroïdal rigide démontable (102) comprenant une pluralité de secteurs circonférentiels (10, 10a) munis de canaux (9) pour le passage d'un fluide de vulcanisation, au moins l'un desdits secteurs (10, 10a) comportant au moins un trou (5) ; et
- un diaphragme souple (1) en matériau élastique, qui est résistant à la chaleur, chimiquement inerte et imperméable au fluide de vulcanisation, sous la forme d'une bande circonférentielle ayant des dimensions lui permettant de couvrir au moins la surface de sommet du support toroïdal (102) et munie d'au moins un dispositif d'accouplement (3) faisant saillie essentiellement depuis sa surface radialement intérieure, inséré dans ledit au moins un trou (5) et se terminant par une partie élargie (2) dont les dimensions sont plus grandes que celles dudit au moins un trou (5), ledit poste d'assemblage comprenant une base (100) sur laquelle sont placés les secteurs (10, 10a) extraits d'un pneu vulcanisé (7) pour être assemblés afin de reconstruire le support toroïdal (102), un axe (103) situé à l'intérieur de la circonférence délimitée par lesdits secteurs (10, 10a), essentiellement dans une position diamétralement opposée à celle dudit au moins un secteur (10, 10a) comportant au moins un trou (5) et supportant le diaphragme (1), s'étendant axialement au-delà du plan tangentiel au côté dudit support (102), et au moins un bras robotisé (104) muni d'une spatule (105) pour monter le diaphragme (1) autour dudit support (102).

30. Poste d'assemblage selon la revendication 29, dans lequel ledit axe (103) comporte, le long de son extension longitudinale, dans une position distincte du plan tangentiel au côté dudit support toroïdal (102), un élément qui interrompt sa continuité longitudinale.

31. Poste d'assemblage selon la revendication 30, dans lequel ledit élément est une configuration de l'extension dudit axe (103).

32. Poste d'assemblage selon la revendication 30, dans lequel ledit élément est un accessoire monté le long de l'extension longitudinale dudit axe.
